# EUROPEAN PATENT SPECIFICATION

(11) **EP 0 702 460 B1**
(45) Date of publication and mention of the grant of the patent: **26.03.2003**
(21) Application number: 95109232.9
(22) Date of filing: 14.06.1995
(51) Int. Cl.: H04B 1/38, H04M 1/72

(54) **A coupling device for plug-in subscriber identity modules**
Konnektor für einschiebbare SIM-Karte
Connecteur pour carte SIM

(30) Priority: 16.09.1994 JP 22119394
(43) Date of publication of application: 20.03.1996
(60) Divisional application: 01103689.4
(73) Proprietor: MATSUSHITA ELECTRIC INDUSTRIAL CO., LTD., Kadoma-shi, Osaka 571-8501 (JP)
(72) Inventor: Ikeda, Yasunobu, Tokyo, 142 (JP); Kudoh, Michiyoshi, Yokohama-shi, Kanagawa, 240 (JP); Inomata, Yoji, Yokohama-shi, Kanagawa, 246 (JP); Juudai, Kanta, Yokohama-shi, Kanagawa, 226 (JP)
(74) Representative: Marx, Lothar, Dr.

(56) References cited:
- EP-A- 0 556 970
- EP-A- 0 599 244
- US-A- 5 257 414

## Description

The present invention relates to a coupling device for plug-in subscriber identity modules (abbreviated as SIM) as used in electronic equipment such as mobile telephone, information terminal and the like which require plug-in SIM with IC cards incorporated in chip form.

US-PS 5 257 414 concerns a portable telephone including a transceiver having a housing and obtaining subscriber information from a SIM coupled to an electronic apparatus contained within the transceiver. Said electronic apparatus forms a SIM chip card chamber into which the SIM chip card is to be inserted for its mechanical accommodation and electrical connection with a SIM chip card reader.

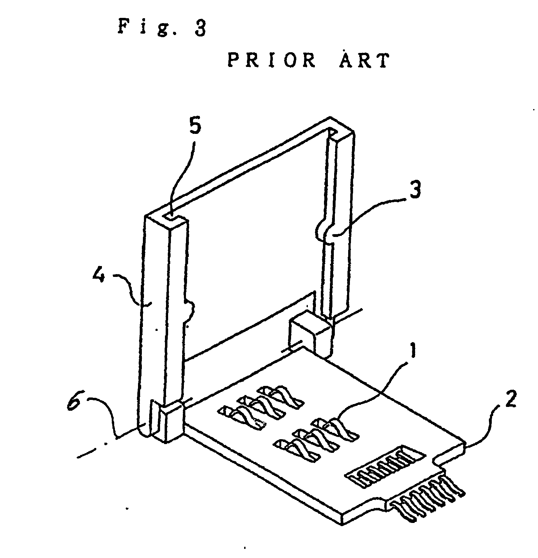

A further prior art coupling device for plug-in SIM is illustrated in Fig. 3.

In Fig. 3, the coupling device for plug-in SIM is comprised of a contact base 2 and a cover 4. One end of the contact base 2 is linked with one end of the cover 4 via a rotating axis 6. A connecting terminal 1 is built-in inside the contact base 2. Slots 5, wherein a plug-in SIM (not shown in Fig. 3) is inserted, and stoppers 3 are formed on the cover 4.

Next, how the foregoing coupling device for plug-in SIM performs will be explained.

In Fig. 3, the cover 4 opens or closes by rotating around the rotating axis 6. While the cover 4 is kept open, a plug-in SIM is placed in the cover 4 by inserting into the slots 5. Upon closing the cover 4, the stoppers 3 are engaged with the contact base 2 to fasten the cover 4 tightly to the contact base 2, thereby bringing the connecting terminal 1 built in the contact base 2 into contact with the plug-in SIM under a constant pressure applied thereto.

Such a coupling device is described in EP 0 556 979 A1.

Accordingly, with the prior art coupling device for plug-in SIM, once the stoppers 3 are engaged with the contact base 2 after closing the cover 4, a pressure is applied to the connecting terminal 1 and the plug-in SIM is electrically connected to the connecting terminal 1.

However, when the plug-in SIM is exchanged in the foregoing prior art coupling device for plug-in SIM, the cover 4 has to be opened or closed by rotating around the axis thereof, thereby requiring the electronic equipment that uses this coupling device to have structures wherein a large opening had to be provided.

Besides, since the contact base 2 and cover 4 are linked with each other to form an integral structure and when a plug-in SIM is exchanged, the plug-in SIM replaced by pulling off from the cover 4 has to be kept by itself, causing some problems.

The object of the present invention is to provide a coupling device for plug-in SIM which makes it possible for the electronic equipment incorporating the plug-in SIM to have the smallest possible structures in the opening that is required for replacement of the plug-in SIM.

The another object of the present invention is to provide a coupling device for plug-in SIM which makes it possible for the plug-in SIM removed for replacement to be stored in a state wherein the removed plug-in SIM is mounted on a tray.

A coupling device for plug-in SIM of the present invention comprises a stand-alone tray for accommodating a plug-in SIM and a stand-alone contact base having a connecting terminal.
the tray accommodates a plug-in SIM.
The tray accommodating a plug-in SIM is mounted on the contact base when the plug-in SIM is needed, and removed when the plug-in SIM becomes no longer needed.
When the tray is mounted on the contact base, the electrodes disposed on the plug-in SIM are in contact with the connecting terminal of the contact base.
Conversely, when the tray is dismounted from the contact base, the tray is completely separated from the contact base.

One of the preferred structures disclosed by the present invention has a guiding means whereby the foregoing tray is inserted into or pulled out of the contact base along the surface thereof.
In addition, a more preferred structure has the foregoing tray provided with a first guiding means on the both sides thereof, respectively, and also has the foregoing contact base provided with a second guiding means on the both sides thereof, respectively, so as to have the mounting and dismounting of the tray performed in such a way wherein the foregoing first guiding means is guided by the second guiding means.
It is particularly preferred to employ structures wherein pin-like studs serving as the first guiding means mate with depressed grooves serving as the second guiding means.

Further, the most preferred is a structure wherein the contact base has a sloping groove at the both ends of the aforementioned grooves in continuation thereof.

Accordingly, the tray that accommodates a plug-in SIM can be easily dismounted from the contact base thereby facilitating the storage of the plug-in SIM in a state wherein each respective plug-in SIM is put together with the tray, rather than individually separated.
Besides, the structures employing the guiding means make it possible to have the tray moved along the surface of the contact base when the tray is inserted therein.
This means that the opening required of the electronic equipment, wherein a coupling device of the present invention is incorporated, can only be of an area almost equal to the cross-sectional area of the contact base.
As a result, an opening to be provided on electronic equipment for exchanges of plug-in SIM can be designed with the smallest possible area, thereby contributing to miniaturization of the electronic equipment.

Also, the structures, wherein a tray provided with a first guiding means and a contact base provided with a second guiding means are employed, enable the tray to be inserted accurately along the surface of the contact base.

Additionally, since the contact base has a sloping groove formed at the both ends of the aforementioned groove, the tray can be first inserted readily into the contact base along the surface thereof.
At this time, the plug-in SIM held in the contact base is not yet in contact with the connecting terminal.
When the tray is further pushed into, then the tray is lifted upward perpendicularly to the contact base surface and mounted in the contact base with the contacting terminal thereof brought into contact with the electrodes of the plug-in SIM.
Accordingly, the plug-in SIM accommodated in the tray does not rub against the connecting terminal incorporated in the contact base.
As a result, the damages inflicted on the connecting terminals are reduced, thereby contributing to the extended life of the connecting terminal.
This is also resulting in an increased number of the repeated use of the plug-in SIM.

Fig. 1 is an exploded view of a coupling device for plug-in SIM as an exemplary embodiment of the present invention.

Fig. 2(A) to Fig. 2(E) show cross-sectional views of the grooves formed on the contact base of a coupling device for plug-in SIM as an exemplary embodiment of the present invention.

Fig. 3 is a perspective view of a prior art coupling device for plug-in SIM.

Next, a coupling device for plug-in SIM of the present invention will be explained with the help of examples.

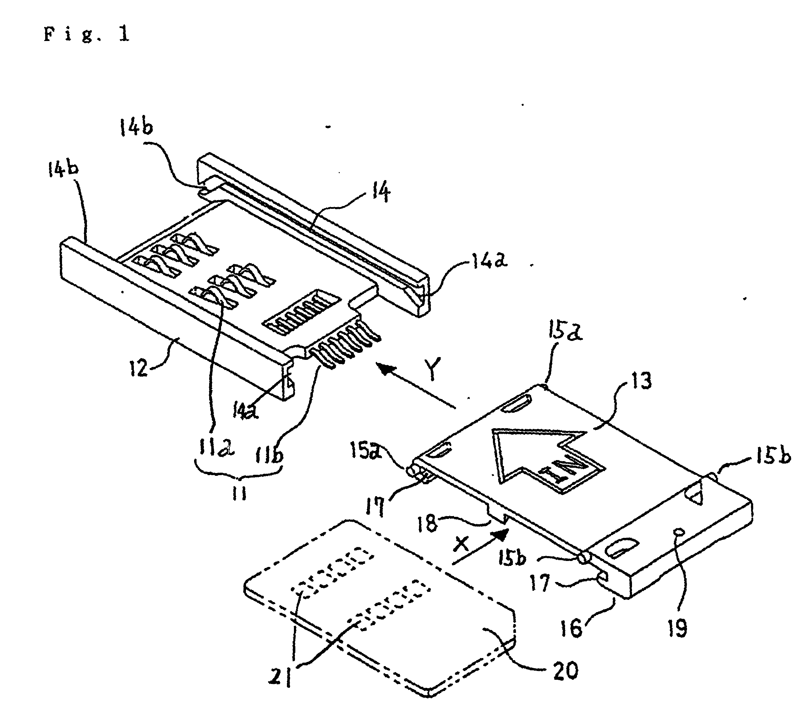

As illustrated in Fig. 1, a coupling device for plug-in SIM comprises an almost plate-shaped contact base 12 having a connecting terminal 11, a tray 13 inserted into the contact base 12 and a plug-in SIM 20 having electrodes 21.

The plug-in SIM 20 is mounted on the tray 13.
The tray 13 with a plug-in SIM 20 mounted therein is accommodated in the contact base 12 by a movement of the tray 13 in the Y direction along the surface of the almost plate-shaped contact base 12.

The plug-in SIM 20 is a card with IC chips mounted thereon, and electrodes 21 are disposed at specified places on the surface of the plug-in SIM 20.

The connecting terminal 11 is incorporated with the contact base 12.
The connecting terminal 11 is partially embedded inside the contact base 12, contacts 11a of the connecting terminal 11 are exposed to the surface of the contact base 12, and connecting members 11b located at the end of the connecting terminal 11 are sticking out from the end surface of the contact base 12.

In a state wherein the tray 13 is accommodated in the contact base 12. the electrodes 21 of the plug-in SIM 20 come into contact with the connecting terminal 11.
When the tray 13 is pulled out of the contact base 12, the tray 13 with the plug-in SIM 20 mounted therein is separated from the contact base 12 and stands alone.

On each respective inside surface of the both sides of the contact base 12, which are situated opposite to each other, is formed a depressed groove 14 as a second guiding means to guide the insertion of the tray 13.
Each respective groove 14 has a first sloping groove 14a disposed slantingly at the entrance thereof and also has a second sloping groove 14b disposed slantingly likewise in the farthest end thereof.

On each respective inside surface of the both ends of the tray 13, which are situated opposite to each other, is formed a SIM holding groove 17 serving as a means of accommodating the plug-in SIM.
The both ends of the plug-in SIM 20 are inserted into the foregoing SIM holding grooves 17 for accommodating the plug-in SIM in the tray 13.

On each of the both outer sides of one end of the tray 13 is formed a first pin-like stud 15a and on each of the both outer sides of the other end of the tray 13 is formed a second pin-like stud 15b, both serving as a first guiding means to guide the insertion of the tray 13 into the contact base 12.

The first guiding means like the foregoing first pin-like studs 15a and second pin-like studs 15b are engaged with the second guiding means like the grooves 14.
A stopper 16 is formed at the end of the tray 13 which corresponds in position to the entrance of the contact base 12.
On a specified position of the tray 13 is formed a hole 19 to hold a hanging means such as a string, chain or the like.

The SIM holding grooves 17 serve the purposes of guiding and holding the plug-in SIM 20 when the plug-in SIM 20 is installed in the tray 13 by insertion.

Next. how the coupling device for plug-in SIM of the foregoing example performs will be explained.

The plug-in SIM 20 is inserted into the tray 13 in the X direction along the SIM holding grooves 17 disposed on the tray 13 and held firmly by SIM stoppers 18.

The tray 13 accommodating the plug-in SIM 20 is then placed at a specified position inside the contact base 12 by inserting into the contact base 12 in the Y direction while the first pin-like studs 15a of the tray 13 being guided along the two depressed grooves 14 which are provided on the contact base 12.
During the foregoing process of insertion into the tray 13, the electrodes 21 of the plug-in SIM accommodated in the tray 13 are not yet brought into contact with the contacts 11a of the connecting terminal 11 incorporated in the contact base 12.
When the first pin-like studs 15a are guided by the second sloping grooves 14b and the second pin-like studs 15b are guided by the first sloping grooves 14a, the stopper 16 hits the end surface of the contact base 12, and in that state the tray 13 is held by the contact base 12.
At this time, the electrodes 21 formed on the plug-in SIM 20 are brought into contact with the contacts 11a of the connecting terminal 11 under a steady pressure applied therebetween, and are electrically connected to the contacts lla. between.
The connecting members 11b at the end of the connecting terminal 11 are electrically connected to the electric circuits of the electronic equipment wherein this coupling device for plug-in SIM is installed.

As the material of the connecting terminal 11 is used, for example, an electro-conductive metallic material, and particularly preferred is the one having spring-like elasticity.

The connecting terminal 11 is electrically insulated from the contact base 12 wherein the connecting terminal 11 is integrated.
As the material of the contact base 12 is used, for example, a resin material or metallic material.

The tray 13 is electrically insulated from the plug-in SIM 20 mounted inside thereof.
As the material of the tray 13 is used, for example, a resin material or metallic material.

Thus, according to the foregoing example, the tray 13 is inserted into the almost plate-shaped contact base 12 along the surface thereof, and when the plug-in SIM 20 is exchanged the tray 13 can be taken out of the tray 13 by pulling out along the surface of the contact base 12.
Therefore, the opening required of the equipment, wherein a coupling device for plug-in SIM is installed, at the time of exchanging the plug-in SIM 20 can be made very small, thereby contributing effectively to miniaturization of the equipment.

Besides, because the tray 13 accommodating the plug-in SIM 20 is separable from the contact base 12, the plug-in SIM 20 can be stored in a state wherein the plug-in SIM 20 is held by the tray 13.

Particularly, the tray 13 can be inserted into the contact base 12 readily and accurately by sliding the tray 13 in the direction along the surface of the contact base 12 because of the structures wherein the first pin-like studs 15a and second pin-like studs 15b are formed on the tray 13 and also the grooves 14 are formed on the contact base 12.

Furthermore, because of the structures wherein the second sloping grooves 14b and first sloping grooves 14a disposed in the grooves 14, the tray 13 is first inserted into the contact base 12 along the base lines of the grooves 14 without causing any contacting between the electrodes 21 and connecting terminal 11, and then the tray 13 is guided along the second sloping grooves 14b and first sloping grooves 14a upward in the vertical direction.
At this time, the electrodes 21 and the contacts 11a of the connecting terminal are brought into contact with each other.
Therefore, the friction between the electrodes 21 of the plug-in SIM 20 mounted on the tray 13 and the contacts 11a of the connecting terminal 11 integrated with the contact base 12 can be eliminated.
As a result, damages inflicted on the connecting terminal 11 are reduced, thereby extending the life thereof.
Also, such an effect as an increased number of the repeated use of the plug-in SIM 20 is realized.

Further, a means of carrying the tray 13 used in connection with the hole 19 makes it effectively possible for the tray 13 dismounted from the contact base 12 to be carried around with ease.
It is needless to say that there are many other variations in the exemplary embodiment of the present invention.

The minimum condition that such other variations in the exemplary embodiment of the present invention is to satisfy the requirements that the contact base and tray should be approximately plate-shaped and provided with appropriate projections and depressions at the specified places thereof, and the tray should be made insertable by its movement along the surface of the contact base.

It is also possible to employ structures wherein a plurality of grooves are formed on the contact base, a plurality of pin-like studs are formed on the tray and the pin-like studs are guided by the grooves.

Conversely. it is possible to employ structures wherein pin-like studs are formed on the contact base, grooves are formed on the tray, and the pin-like studs on the contact base are guided by the grooves on the tray.

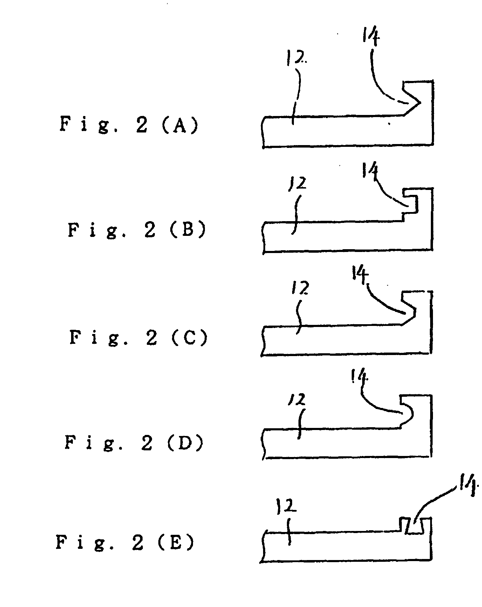

Also, it is possible to employ structures wherein a groove 14 (having a narrower width at the bottom than at the opening) as shown in Fig. 2(E) is formed on the upper surface of each respective edge of the contact base, pin-like studs mating to the foregoing groove are formed on the lower surface of each respective edge of the tray, and the pin-like studs are guided by the grooves.

It is further possible to employ structures wherein the groove's cross-section is triangular as shown in Fig. 2(A), square as shown in Fig. 2(B), polygonal as shown in Fig. 2(C), semicircular as shown in Fig. 2(D) or of combinations of above, and the pin-like studs are shaped to mate to the foregoing grooves.

The sloping grooves provided at the both ends of the grooves can be of any shapes as long as the shape employed serves the purpose of guiding the inserted tray upward vertically against the surface of the contact base.

It is possible to employ structures wherein the connecting members at the end of the connecting terminal are exposed on the lower side surface of the contact base while the contacts of the connecting terminal being exposed on the upper side surface of the contact base.

It is also possible to employ structures wherein the respective materials used to make the contacts and connecting members of the connecting terminal are different from each other, and electrical connections are established therebetween.

It is feasible to employ structures wherein continuously formed grooves, discontinuously formed grooves, grooves formed only at both ends and the like are provided as the means of accommodating the plug-in SIM in the tray.

## Claims

1. A coupling device for plug-in subscriber identity modules SIM comprising:
a) a stand-alone tray (13) for accommodating a plug-in SIM (20); and
b) a stand-alone contact base (12) incorporating a connecting terminal (11),
**characterized in that**
c) said tray (13) is mountable in or dismountable from said contact base (12).

2. A coupling device for plug-in subscriber identity modules according to claim 1, **characterized in that** a first guiding means (15a, 15b) is formed on said tray (13), a second guiding means (14) is formed on said contact base (12), and said tray (13) is mounted in or dismounted from said contact base (12) by the movement of said first guiding means (15a, 15b) being guided by said second guiding means (14).

3. A coupling device for plug-in subscriber identity modules according to claim 2, **characterized in that** pin-like studs (15a, 15b) formed on the both side surfaces of said tray (13) serve as said first guiding means, and depressed grooves (14) formed on the both side surfaces of said contact base (12) serve as said second guiding means.

4. A coupling device for plug-in subscriber identity modules according to any of claims 2 or 3, **characterized in that** said tray (13) is inserted into or pulled out of said contact base (12) according to the movement of said first guiding means (15a, 15b) guided by said second guiding means (14).

5. A coupling device for plug-in subscriber identity modules according to any of claims 1 to 4, **characterized in that**
- the plug-in SIM (20) is provided with electrodes (21);
- said tray (13) accommodating the plug-in SIM (20) is inserted into or pulled out of said contact base (12) by the movement thereof along the surface of said contact base (12);
- when said tray (13) is inserted into said contact base (12), said electrodes (21) of said plug-in SIM (20) are brought into contact with said connecting terminal (11); and
- when said tray (13) is pulled out of said contact base (12), said tray (13) accommodating said plug-in SIM (20) is detached from said contact base (12).

6. A coupling device for plug-in subscriber identity modules according to any of claims 3 to 5, **characterized in that** sloping grooves (14a, 14b) are formed on the both ends of said grooves (14) in continuation thereof, and when said tray (13) is mounted in said contact base (12), electrodes (21) provided on the plug-in SIM (20) are connected to said connecting terminal (11).

7. A coupling device for plug-in subscriber identity modules according to any of claims 1 to 6, **characterized in that** said tray (13) is provided with a means (17) of accommodating said plug-in SIM (20).

8. A coupling device for plug-in subscriber identity modules according to claim 7, **characterized in that** grooves (17) formed on the both ends of said tray (13) serve as said means of accommodating the plug-in SIM (20).

9. A coupling device for plug-in subscriber identity modules according to any of claims 1 to 8, **characterized in that** a means (19) of attaching a carrying material to said tray (13) is provided therewith.

10. A coupling device for plug-in subscriber identity modules according to any of claims 6 to 9, **characterized in that**
a) said tray (13) comprises an accommodation means (17) wherein said plug-in SIM (20) is accommodated;
b) said connecting terminal (11) is comprised of contacts (11a) and connecting members (11b);
c) said tray (13) accommodating said plug-in SIM (20) is inserted into said contact base (12) by said pin-like studs (15a, 15b) being guided to said grooves (14);
d) said electrodes (21) of the plug-in SIM (20) accommodated in said tray (13) are brought into contact with said contacts (11a) of the connecting terminal (11) by said pin-like studs (15a, 15b) being guided to said sloping grooves (14a, 14b); and
e) when said tray (13) is pulled out of said contact base (12) by said pin-like studs (15a, 15b) being guided to said grooves (14) and sloping grooves (14a, 14b), said tray (13) accommodating said plug-in SIM (20) is detached from said contact base (12).

## Patentansprüche

1. Anschlussvorrichtung für einführbare Teilnehmeridentifizierungsmodule SIM, die aufweist:
a) einen autonomen Trog bzw. Rahmen (13) zur Aufnahme eines einführbaren SIM-Moduls (20); und
b) eine autonome Kontaktbasis (12) mit einem Anschlussterminal (11),
**dadurch gekennzeichnet, dass**
c) der Trog bzw. Rahmen (13) in die Kontaktbasis (12) montierbar oder von der Kontaktbasis lösbar ist.

2. Anschlussvorrichtung für einführbare Teilnehmeridentifizierungsmodule nach Anspruch 1, **dadurch gekennzeichnet, dass** an dem Trog bzw. Rahmen (13) eine erste Führungseinrichtung (15a, 15b) ausgebildet ist, an der Kontaktbasis (12) eine zweite Führungseinrichtung (14) ausgebildet ist und der Trog bzw. Rahmen (13) in die Kontaktbasis (12) montierbar oder von ihr lösbar ist, indem die Bewegung der ersten Führungseinrichtung (15a, 15b) von der zweiten Führungseinrichtung (14) geführt wird.

3. Anschlussvorrichtung für einführbare Teilnehmeridentifizierungsmodule nach Anspruch 2, **dadurch gekennzeichnet, dass** stiftähnliche Ansätze (15a, 15b), die an beiden Seitenflächen des Trogs bzw. Rahmens (13) gebildet sind, als die erste Führungseinrichtung dienen und eingelassene Rillen (14), die an beiden Seitenflächen der Kontaktbasis (12) gebildet sind, als die zweite Führungseinrichtung dienen.

4. Anschlussvorrichtung für einführbare Teilnehmeridentifizierungsmodule nach einem der Ansprüche 2 oder 3 , **dadurch gekennzeichnet, dass** der Trog bzw. Rahmen (13) in die Kontaktbasis (12) eingeführt oder aus ihr herausgezogen wird entsprechend der Bewegung der ersten Führungseinrichtung (15a, 15b), die von der zweiten Führungseinrichtung (14) geführt wird.

5. Anschlussvorrichtung für einführbare Teilnehmeridentifizierungsmodule nach einem der Ansprüche 1 bis 4, **dadurch gekennzeichnet, dass**
- das einführbare SIM-Modul (20) mit Elektroden (21) versehen ist;
- der Trog bzw. Rahmen (13), der das einführbare SIM-Modul (20) aufnimmt, in die Kontaktbasis (12) eingeführt oder aus ihr herausgezogen wird durch seine Bewegung entlang der Oberfläche der Kontaktbasis (12);
- die Elektroden (21) des einführbaren SIM-Moduls (20) mit dem Anschlussterminal (11) in Kontakt gebracht sind, wenn der Trog bzw. Rahmen (13) in die Kontaktbasis (12) eingeführt ist; und
- der Trog bzw. Rahmen (13), der das einführbare SIM-Modul (20) aufnimmt, von der Kontaktbasis (12) getrennt wird, wenn der Trog bzw. Rahmen (13) aus der Kontaktbasis (12) herausgezogen wird.

6. Anschlussvorrichtung für einführbare Teilnehmeridentifizierungsmodule nach einem der Ansprüche 3 bis 5, **dadurch gekennzeichnet, dass** abfallende Rillen (14a, 14b) an beiden Enden der Rillen (14) ausgebildet sind und an diese anschließen, und dass an dem einführbaren SIM-Modul (20) vorgesehene Elektroden (21) an das Anschlussterminal (11) angeschlossen sind, wenn der Trog bzw. Rahmen (13) in die Kontaktbasis (12) montiert ist.

7. Anschlussvorrichtung für einführbare Teilnehmeridentifizierungsmodule nach einem der Ansprüche 1 bis 6, **dadurch gekennzeichnet, dass** der Trog bzw. Rahmen (13) mit einer Aufnahmeeinrichtung (17) für das einführbare SIM-Modul (20) versehen ist.

8. Anschlussvorrichtung für einführbare Teilnehmeridentifizierungsmodule nach Anspruch 7, **dadurch gekennzeichnet, dass** Rillen (17), die an beiden Enden des Trogs bzw. Rahmens (13) gebildet sind, als die Aufnahmeeinrichtung für das einführbare SIM-Modul (20) dienen.

9. Anschlussvorrichtung für einführbare Teilnehmeridentifizierungsmodule nach einem der Ansprüche 1 bis 8, **dadurch gekennzeichnet, dass** an dem Trog bzw. Rahmen (13) eine Einrichtung (19) zum Anbringen eines Tragematerials vorgesehen ist.

10. Anschlussvorrichtung für einführbare Teilnehmeridentifizierungsmodule nach einem der Ansprüche 6 bis 9, **dadurch gekennzeichnet, dass**
a) der Trog bzw. Rahmen (13) eine Aufnahmeeinrichtung (17) aufweist, in der das einführbare SIM-Modul (20) aufgenommen ist;
b) das Anschlussterminal (11) Kontakte (11a) und Anschlusselemente (11b) aufweist oder hiervon gebildet wird;
c) der Trog bzw. Rahmen (13), der das einführbare SIM-Modul (20) aufnimmt, in die Kontaktbasis (12) eingeführt wird, indem die stiftähnlichen Ansätze (15a, 15b) von den Rillen (14) geführt werden;
d) die Elektroden (21) des einführbaren SIM-Moduls (20), das von dem Trog bzw. Rahmen (13) aufgenommen ist, an die Kontakte (11a) des Anschlussterminals (11) angeschlossen werden, indem die stiftähnlichen Ansätze (15a, 15b) von den abfallenden Rillen (14a, 14b) geführt werden; und
e) der Trog bzw. Rahmen (13), der das einführbare SIM-Modul (20) aufnimmt, von der Kontaktbasis (12) getrennt wird, wenn der Trog bzw. Rahmen (13) aus der Kontaktbasis (12) herausgezogen wird, wobei die stiftähnlichen Ansätze (15a, 15b) von den Rillen (14) und abfallenden Rillen (14a, 14b) geführt werden.

## Revendications

1. Dispositif de couplage pour des cartes enfichables SIM d'identification d'abonnés, comprenant :
a) un plateau autonome (13) destiné à recevoir une carte enfichable SIM (20); et
b) une base de contact autonome (12) comportant une borne de connexion (11),
**caractérisé en ce que**
c) ledit plateau (13) peut être monté sur ou détaché de ladite base de contact (12).

2. Dispositif de couplage pour des cartes enfichables d'identification d'abonnés selon la revendication 1, **caractérisé en ce qu'**un premier moyen de guidage (15a, 15b) est formé sur ledit plateau (13), un second moyen de guidage (14) est formé sur ladite base de contact (12), et ledit plateau (13) peut être monté sur ou détaché de ladite base de contact (12) par le mouvement dudit premier moyen de guidage (15a, 15b) guidé par ledit second moyen de guidage (14).

3. Dispositif de couplage pour des cartes enfichables d'identification d'abonnés selon la revendication 2, **caractérisé en ce que** des ergots (15a, 15b) analogues à des axes formés sur les deux surfaces latérales dudit plateau (13) constituent ledit premier moyen de guidage, et des gorges (14) en renfoncement formées sur les deux surfaces latérales de ladite base de contact (12) constituent ledit second moyen de guidage.

4. Dispositif de couplage pour des cartes enfichables d'identification d'abonnés selon l'une quelconque des revendications 2 et 3, **caractérisé en ce que** ledit plateau (13) est inséré dans ladite base de contact (12) ou extrait de celle-ci en fonction du mouvement dudit premier moyen de guidage (15a, 15b) guidé par ledit second moyen de guidage (14).

5. Dispositif de couplage pour des cartes enfichables d'identification d'abonnés selon l'une quelconque des revendications 1 à 4, **caractérisé en ce que**
- la carte enfichable SIM (20) comporte des électrodes (21) ;
- ledit plateau (13) recevant la carte enfichable SIM (20) est inséré dans ladite base de contact (12) ou extrait de celle-ci en passant sur la surface de ladite base de contact (12) ;
- lorsque ledit plateau (13) est inséré dans ladite base de contact (12), lesdites électrodes (21) de ladite carte enfichable SIM (20) sont mises au contact de ladite borne de connexion (11) ; et
- lorsque ledit plateau (13) est extrait de ladite base de contact (12), ledit plateau (13) recevant ladite carte enfichable SIM (20) se détache de ladite base de contact (12).

6. Dispositif de couplage pour des cartes enfichables d'identification d'abonnés selon l'une quelconque des revendications 3 à 5, **caractérisé en ce que** des gorges inclinées (14a, 14b) sont formées aux deux extrémités desdites gorges (14) dans le prolongement de celles-ci, et lorsque ledit plateau (13) est monté dans ladite base de contact (12), des électrodes (21) disposées sur la carte enfichable SIM (20) sont connectées à ladite borne de connexion (11).

7. Dispositif de couplage pour des cartes enfichables d'identification d'abonnés selon l'une quelconque des revendications 1 à 6, **caractérisé en ce que** ledit plateau (13) est pourvu d'un moyen (17) pour recevoir ladite carte enfichable SIM (20).

8. Dispositif de couplage pour des cartes enfichables d'identification d'abonnés selon 1a revendication 7, **caractérisé en ce que** des gorges (17) formées aux deux extrémités dudit plateau (13) constituent ledit moyen de réception de la carte enfichable SIM (20).

9. Dispositif de couplage pour des cartes enfichables d'identification d'abonnés selon l'une quelconque des revendications 1 à 8, **caractérisé en ce qu'**un moyen (19) pour fixer un organe de transport sur ledit plateau (13) équipe celui-ci.

10. Dispositif de couplage pour des cartes enfichables d'identification d'abonnés selon l'une quelconque des revendications 6 à 9, **caractérisé en ce que**
a) ledit plateau (13) comporte un moyen de réception (17) dans lequel est reçue ladite carte enfichable SIM (20) ;
b) ladite borne de connexion (11) est composée de contacts (11a) et d'éléments de connexion (11b);
c) ledit plateau (13) recevant ladite carte enfichable SIM (20) est inséré dans ladite base de contact (12) à l'aide desdits ergots (15a, 15b) analogues à des axes guidés jusqu'auxdites gorges (14) ;
d) lesdites électrodes (21) de la carte enfichable SIM (20) reçue dans ledit plateau (13) sont mises au contact desdits contacts (11a) de la borne de connexion (11) par lesdits ergots (15a, 15b) analogues à des axes guidés jusqu'auxdites gorges inclinées (14a, 14b) ; et
e) lorsque ledit plateau (13) sort de ladite base de contact (12) par lesdits ergots (15a, 15b) analogues à des axes guidés jusqu'auxdites gorges (14) et gorges inclinées (14a, 14b), ledit plateau (13) recevant ladite carte enfichable SIM (20) se détache de ladite base de contact (12).
